# EUROPÄISCHE PATENTSCHRIFT

(11) **EP 3 378 621 B1**
(45) Veröffentlichungstag und Bekanntmachung des Hinweises auf die Patenterteilung: **19.05.2021**
(21) Anmeldenummer: 18163226.6
(22) Anmeldetag: 22.03.2018
(51) Int. Cl.: B29C 45/16, B29C 45/32, B29C 45/04

(54) **ETAGENWERKZEUG**
STACK MOULD
OUTIL À ÉTAGES

(30) Priorität: 22.03.2017 DE 102017106179
(43) Veröffentlichungstag der Anmeldung: 26.09.2018
(73) Patentinhaber: HACK Formenbau GmbH, 73230 Kirchheim u. Teck (DE)
(72) Erfinder: Hack, Gunnar, 73230 Kirchheim (DE); Stauss, Martin, 72147 Nehren (DE); Pfannenschwarz, André, 73230 Kirchheim-Jesingen (DE)
(74) Vertreter: Manitz Finsterwald Patent- und Rechtsanwaltspartnerschaft mbB

(56) Entgegenhaltungen:
- WO-A1-2007/082394
- WO-A1-2007/085063
- WO-A2-2007/055607
- US-A- 4 427 359
- US-A1- 2004 094 866
- US-A1- 2006 153 947

## Beschreibung

Die vorliegende Erfindung betrifft ein Etagenwerkzeug für eine Spritzgießvorrichtung, wobei das Etagenwerkzeug einen Mittelblock sowie einen ersten und zweiten äußeren Formblock und zumindest zwei Halteteile, welche zugleich auf derselben Seite des Mittelblocks anordenbar sind, umfasst. Der Mittelblock und der erste und zweite äußere Formblock sind, bevorzugt linear zueinander, zwischen einer geschlossenen Stellung und einer geöffneten Stellung verstellbar. Die äußeren Formblöcke weisen auf ihrer jeweils dem Mittelblock zugewandten Seite Außenkavitäten auf. In entsprechender Weise umfasst der Mittelblock auf seinen den äußeren Formblöcken zugewandten Seiten jeweils Innenkavitäten. Die Außenkavitäten wirken in der geschlossenen Stellung mit den Innenkavitäten zusammen, um Formhohlräume zu bilden, wobei zumindest ein Teilbereich der Formhohlräume von verstellbaren Halteteilen gebildet wird, welche bezüglich einer Drehachse, insbesondere kreisförmig, vollständig um den Mittelblock herum bewegbar sind. Weiterhin umfasst das Etagenwerkzeug zumindest eine Hubvorrichtung, welche ausgebildet ist, die Halteteile von dem Mittelblock weg zu bewegen und/oder dem Mittelblock anzunähern.

Etagenwerkzeuge werden in Spritzgießvorrichtungen bzw. Spritzgießmaschinen verwendet, um einen hohen Durchsatz zu erzielen, da in der geschlossenen Stellung gleichzeitig sowohl ein Spritzgießen in den Formhohlräumen zwischen dem ersten äußeren Formblock und dem Mittelblock als auch in den Formhohlräumen zwischen dem zweiten äußeren Formblock und dem Mittelblock möglich ist.

Die zu erstellenden Gegenstände (d.h. die Spritzlinge oder Formteile) werden nach dem Spritzgießen von den verstellbaren Halteteilen gehalten und können von den Halteteilen um den Mittelblock herum bewegt werden.

Die WO 2007/082394 A1 zeigt eine Spritzgießvorrichtung mit einem Etagenwerkzeug nach dem Oberbegriff des Anspruchs 1. Auch aus der WO 2007/085063 A1 ist eine Spritzgießvorrichtung mit einem Etagenwerkzeug bekannt, welches einen Mittelblock und zwei äußere Formblöcke umfasst. Das Etagenwerkzeug weist ein Drehkreuz auf, welches mittig im Mittelblock drehbar gelagert ist und vier Paare von Drehkreuzarmen umfasst, welche jeweils an der Ober- und Unterseite des Drehkreuzes angeordnet sind. Innerhalb der Drehkreuzarme sind Führungsschienen zur lateralen Führung eines Halteteils ausgebildet. Dabei ist jeweils ein Halteteil zugleich auf derselben Seite des Mittelblocks anordenbar. Mittels einer Hubvorrichtung können die Halteteile vom Mittelblock wegbewegt oder dem Mittelblock angenähert werden. Die US 4 427 359 A offenbart ein Etagenwerkzeug zum kombinierten Spritzgießen und Streckblasformen, wobei zunächst ein Vorformling spritzgegossen, dann um einen Mittelblock rotiert und in Form geblasen wird. Diese Bewegung rund um den Mittelblock erfolgt über ein kreuzförmiges Drehgestell, wobei Halteelemente vorgesehen sind, die sich jeweils zwischen zwei Armen des Drehgestells erstrecken. Dabei ist auch eine Hubvorrichtung vorgesehen, die eine relative Bewegung zwischen dem Mittelblock und den Halteteilen bewirkt. Mittels der Hubvorrichtung können die Halteelemente entlang einer Stange verschoben werden.

Bei der Verwendung herkömmlicher Etagenwerkzeuge ist von Nachteil, dass die Flexibilität im Einsatz des Etagenwerkzeugs eingeschränkt ist, d.h. das Spritzgießen von mehrkomponentigen Spritzlingen oder die Anpassung des Etagenwerkzeugs an verschiedene Spritzgießprozesse ist nur mit hohem Aufwand möglich. Es ist daher die Aufgabe der vorliegenden Erfindung, ein Etagenwerkzeug der vorgenannten Art derart weiterzubilden, dass das Etagenwerkzeug flexibel an verschiedene Spritzgießprozesse anpassbar ist und hierdurch zur Wirtschaftlichkeit des Spritzgießprozesses beiträgt.

Diese Aufgabe wird durch ein Etagenwerkzeug gemäß dem ersten unabhängigen Anspruch (Anspruch 1) und insbesondere dadurch gelöst, dass die Hubvorrichtung während einer Drehung der Halteteile um die Drehachse von den Halteteilen entkoppelt wird.

Um die Halteteile von der Hubvorrichtung zu entkoppeln, können die Halteteile einen Koppelabschnitt umfassen, welcher in einen Aufnahmeabschnitt der Hubvorrichtung eingreift, um eine Wirkverbindung zwischen Hubvorrichtung und Halteteil zu schaffen. Die Hubvorrichtung kann zwei Aufnahmeabschnitte umfassen, welche im Bereich der Ober- und Unterseite des Mittelblocks angeordnet sind. Jeder Aufnahmeabschnitt kann durch einen separaten mechanischen Aktor, z.B. einen Servomotor, bewegt werden. In entsprechender Weise können die Halteteile an einem ersten (oberen) Ende einen ersten Koppelabschnitt und an einem zweiten (unteren) Ende einen zweiten Koppelabschnitt umfassen.

Es sind zumindest zwei Halteteile vorgesehen, die gleichzeitig zwischen dem Mittelblock und demselben äußeren Formblock angeordnet werden können oder angeordnet sind.

Es können also zwei Halteteile z.B. zwischen dem Mittelblock und dem ersten äußeren Formblock angeordnet sein, so dass beim Spritzgießen mittels der Formhohlräume zwischen dem ersten äußeren Formblock und dem Mittelblock Spritzlinge von zwei Halteteilen gehalten werden können. Hierdurch ergibt sich der Vorteil, dass z.B. eine größere Anzahl von Spritzlingen gleichzeitig geformt werden kann oder dass z.B. verschiedene Arten von Spritzlingen von den zwei unterschiedlichen Halteteilen gehalten werden können. Auf diese Weise können sich ein höherer Durchsatz und damit eine höhere Wirtschaftlichkeit und/oder eine höhere Flexibilität beim Einsatz des Etagenwerkzeugs ergeben.

Bevorzugt kann das Etagenwerkzeug auch vier Halteteile oder genau vier Halteteile aufweisen, von welchen jeweils zwei zugleich auf derselben Seite des Mittelblocks angeordnet sind. Hierdurch ist es möglich, dass zwei Halteteile zwischen dem ersten äußeren Formblock und dem Mittelblock und zwei weitere Halteteile zwischen dem zweiten äußeren Formblock und dem Mittelblock angeordnet sind.

Der Mittelblock kann zusammen mit den äußeren Formblöcken somit zwei "aktive Flächen" zum Spritzgießen bilden. Die aktiven Flächen sind dabei die Flächen, an welchen die Formhohlräume gebildet sind. Beispielsweise kann an der aktiven Fläche zwischen dem ersten äußeren Formblock und dem Mittelblock das Spritzgießen einer ersten Komponente erfolgen. Mittels der Halteteile können die dann nur aus einer Komponente bestehenden Spritzlinge bzw. Formteile nun um 180° um den Mittelblock rotiert werden. Daraufhin kann an der aktiven Fläche zwischen dem zweiten äußeren Formblock und dem Mittelblock eine zweite Komponente zu den Spritzlingen hinzugefügt werden, so dass auf einfache Art und Weise Zweikomponenten-Spritzlinge hergestellt werden können, wobei zugleich ein hoher Durchsatz erzielbar ist.

Insbesondere werden die Halteteile nur in Schritten von 180° um den Mittelblock bezüglich der Drehachse herum bewegt. Dies bedeutet, dass die Halteteile nur im Bereich zwischen einem der äußeren Formblöcke und dem Mittelblock angeordnet werden. Alternativ sind aber auch kleinere Schrittweiten möglich, beispielsweise 45°- oder 90°-Schritte. Durch kleinere Schrittweiten ist es möglich, die Halteteile nach dem Spritzgießen z.B. um 45° oder 90° zu bewegen und die Spritzlinge bzw. Formteile an dieser Position auszuwerfen. Zudem ist es möglich, in der 45° oder 90°-Position zusätzliche Teile den Spritzlingen hinzuzufügen, beispielsweise durch das Auflegen eines Labels aus Papier oder Kunststoff auf den Spritzling. Alternativ können die zusätzlichen Teile auch zwischen dem Mittelblock und den äußeren Formblöcken an den Spritzlingen angebracht werden, indem z.B. mit einem Greifarm die zusätzlichen Teile an den zwischen Mittelblock und äußeren Formblöcken befindlichen Spritzlingen angebracht werden. Alternativ oder zusätzlich kann auch anstelle von Teilbereichen der Innen- und/oder Außenkavitäten eine Funktionsstation in der aktiven Fläche vorgesehen sein, wobei in der Funktionsstation z.B. die zusätzlichen Teile den Spritzlingen bzw. Formteilen hinzugefügt werden können.

Bevorzugt sind der Mittelblock und die äußeren Formblöcke jeweils quader- oder kubusförmig ausgebildet. Alternativ sind aber auch andere geometrische Formen denkbar, wie beispielsweise Polyeder. Unter dem Begriff "Block" ist dabei nicht nur ein massiver oder annähernd massiver Block zu verstehen, stattdessen soll der Begriff Block derart verstanden werden, dass ein vorbestimmter Raumbereich von dem jeweiligen Block eingenommen oder begrenzt wird.

Insbesondere umfasst der Mittelblock sechs Außenflächen, wobei zwei gegenüberliegende Seitenflächen die aktiven Flächen definieren und den äußeren Formblöcken zugewandt sind. Die Ober- und die Unterseite des Mittelblocks können von der Drehachse durchdrungen werden.

Bei den mit dem Etagenwerkzeug herzustellenden Gegenständen bzw. Spritzlingen kann es sich z.B. um Zahnbürsten, Griffe für Rasierapparate und/oder Griffe für Schraubendreher und dergleichen handeln. Solche Spritzlinge werden üblicherweise aus mehr als einer Materialkomponente hergestellt.

Vorteilhafte Weiterbildungen der Erfindung sind der Beschreibung, den Zeichnungen sowie den abhängigen Ansprüchen zu entnehmen.

Gemäß einer ersten vorteilhaften Ausführungsform der Erfindung ist die Drehachse zentral in dem Mittelblock angeordnet und/oder ist ein Drehgestell vorgesehen, welches sich um die Drehachse dreht und die Halteteile um den Mittelblock herum bewegt. Die Halteteile können an dem Drehgestell befestigt sein. Das Drehgestell kann sich um die Drehachse drehen und die Halteteile kreisförmig um die Drehachse und damit auch um den Mittelblock herum bewegen. Alle oder zumindest die an dem Drehgestell befestigten Halteteile rotieren somit bevorzugt um dieselbe Drehachse. Hierbei kann sich die Drehachse z.B. durch einen Diagonalenschnittpunkt der Ober- und/oder Unterseite des Mittelblocks erstrecken.

Die Drehachse kann sich bevorzugt vertikal durch den Mittelblock hindurch erstrecken. Somit können die Halteteile jeweils an den Seitenflächen des Mittelblocks vorbeibewegt werden. Das Drehgestell kann an der Ober- und/oder Unterseite des Mittelblocks drehbar gelagert sein. Das Drehgestell ist vorteilhafterweise dazu ausgebildet, die Halteteile um 360° um den Mittelblock herum zu bewegen.

Gemäß einer weiteren vorteilhaften Ausführungsform erstreckt sich das Drehgestell sowohl ober- als auch unterhalb des Mittelblocks. Hierbei können die Halteteile sowohl ober- als auch unterhalb des Mittelblocks von dem Drehgestell befestigt sein und/oder gehalten werden, wodurch sich eine erhöhte Stabilität der Halteteile ergibt. Die Abschnitte des Drehgestells, die sich ober- und unterhalb des Mittelblocks befinden, können durch eine, insbesondere vertikale, Welle verbunden sein, so dass ein synchroner Antrieb des Drehgestells sowohl ober- als auch unterhalb des Mittelblocks sichergestellt ist. Alternativ oder zusätzlich kann sowohl ober- als auch unterhalb des Mittelblocks jeweils ein Antrieb vorgesehen sein, der die jeweiligen Abschnitte des Drehgestells, die sich ober- und unterhalb des Mittelblocks befinden, antreibt. Durch eine geeignete Ansteuerung der Antriebe kann ebenfalls eine synchrone Bewegung sichergestellt werden.

Vorteilhafterweise umfasst das Drehgestell ein Drehlager, welches in der Oberseite des Mittelblocks angeordnet ist. Zudem kann das Drehgestell auch ein Drehlager in der Unterseite des Mittelblocks umfassen. Die Drehlager können einen, insbesondere mittels Kugellagern gelagerten, Drehring aufweisen. Die Drehlager können eine Öffnung in der Ober- und/oder Unterseite des Mittelblocks definieren, sodass weitere Komponenten - wie später ausgeführt - innerhalb der Drehlager an dem Mittelblock befestigt werden können.

Gemäß einer weiteren vorteilhaften Ausführungsform sind die Halteteile dauerhaft mit dem Drehgestell gekoppelt. Dies bedeutet, die Halteteile sind nicht von dem Drehgestell lösbar, so dass die Halteteile bei einer Drehung des Drehgestells immer mit dem Drehgestell mitbewegt werden. Eine aufwendige Mechanik zum Ein- und Auskoppeln der Halteteile kann auf diese Weise eingespart werden.

Gemäß einer weiteren vorteilhaften Ausführungsform umfasst das Drehgestell zumindest ein Schienenpaar, welches eines der Halteteile verschieblich befestigt. Bevorzugt ist für jedes an dem Drehgestell befestigte Halteteil ein Schienenpaar vorgesehen, wobei jeweils ein Schienenpaar genau einem Halteteil zugeordnet ist und dasjenige Halteteil verschieblich befestigt. Das Schienenpaar kann zwei parallel zueinander verlaufende Schienen umfassen. Insbesondere gehen die Schienenpaare aus dem Drehring des Drehlagers hervor.

Die Schienenpaare können beispielsweise aus dem Drehring auf der Oberseite des Mittelblocks hervorgehen und die Halteteile im Bereich der Oberseite des Mittelblocks befestigen. Zusätzlich oder alternativ können auch Schienenpaare Teil des Drehgestells sein, die auf der Unterseite des Mittelblocks angeordnet sind und beispielsweise aus dem Drehring des Drehlagers auf der Unterseite des Mittelblocks hervorgehen. Die Halteteile können auf diese Weise besonders sicher gehalten werden, nämlich an ihrem jeweiligen oberen und unteren Ende.

Weiter ist es bevorzugt, wenn zumindest vier Halteteile vorgesehen sind, von welchen jeweils zwei zugleich auf gegenüberliegenden Seiten des Mittelblocks anordenbar sind. Damit umfasst das Etagenwerkzeug zumindest vier (oder auch genau vier) Halteteile, von welchen sich jeweils zwei bezüglich des Mittelblocks gegenüberliegen. Außerdem können die Positionen der Halteteile relativ zu der Drehachse achsensymmetrisch sein. Hierdurch ist es möglich, jeweils zwei Halteteile an einer aktiven Fläche und zwei weitere Halteteile an der gegenüberliegenden aktiven Fläche anzuordnen. Durch die Verwendung der vier Halteteile können an beiden aktiven Flächen, d.h. in beiden "Etagen", gleichzeitig Spritzlinge bzw. Formteile geformt werden.

Vorteilhafterweise ist die jeweilige Längsrichtung der Halteteile parallel zueinander. Die Halteteile können beabstandet zueinander angeordnet sein aber zugleich dieselbe Orientierung im Raum aufweisen. Die Längsrichtung der Halteteile kann parallel zu der Drehachse und/oder vertikal verlaufen.

Beispielsweise kann an den Halteteilen ein Vorsprung vorgesehen sein, welcher in eine Nut der Hubvorrichtung eingreift. Der Aufnahmeabschnitt und der Koppelabschnitt können dabei derart ausgebildet sein, dass die Wirkverbindung automatisch dann hergestellt wird, wenn die Halteteile zwischen dem Mittelblock und dem ersten oder zweiten äußeren Formblock angeordnet sind. Hierfür kann der Aufnahmeabschnitt z.B. eine gekrümmte Nut aufweisen, so dass der Koppelabschnitt, welcher kreisförmig um den Mittelblock herum bewegt wird, in den Aufnahmeabschnitt einfahren kann.

Bevorzugt ist/sind die Hubvorrichtung oder die Hubvorrichtungen stationär und z.B. am Mittelblock befestigt. Beispielsweise kann/können die Hubvorrichtung(en) innerhalb des Drehrings des Drehlagers nicht drehbar an dem Mittelblock befestigt sein.

Weiter bevorzugt ist für jedes Halteteil eine separate Hubvorrichtung vorgesehen. Dies bedeutet, die Anzahl der Hubvorrichtungen entspricht der Anzahl der Halteteile. Hierdurch kann wiederum die Flexibilität von Abläufen bei der Verwendung des Etagenwerkzeugs verbessert werden, da jedes Halteteil durch die separate Hubvorrichtung auch separat bewegt werden kann. Beispielsweise können Spritzlinge an einem ersten Halteteil hierdurch früher als Spritzlinge an einem zweiten Halteteil aus den Formhohlräumen herausgehoben werden. Auf diese Weise lassen sich z.B. unterschiedliche Abkühlzeiten für verschiedene Spritzlinge realisieren.

Gemäß einer weiteren vorteilhaften Ausführungsform ist die Hubvorrichtung ausgebildet, die Halteteile senkrecht zu der jeweiligen Seite des Mittelblocks zu bewegen. Die Hubvorrichtung ermöglicht somit eine Annäherung bzw. Entfernung des Halteteils von der jeweils am nächsten liegenden Seite des Mittelblocks in Richtung einer Normalen zu der jeweiligen Seite des Mittelblocks. Insbesondere kann der Mittelblock Vertiefungen, beispielsweise in Quader- oder Grabenform, für die Halteteile umfassen, wobei die Halteteile durch die Hubvorrichtung aus der jeweiligen Vertiefung heraushebbar sind. Die Vertiefungen können Teil der Innenkavitäten sein.

Die Vertiefungen in dem Mittelblock sind vorteilhafterweise in ihrer Größe und/oder Form an die Halteteile angepasst, sodass die Halteteile in den Vertiefungen möglichst spielfrei gelagert sind, wenn die Halteteile in den Vertiefungen liegen. Beispielsweise können sowohl die Halteteile als auch die Vertiefungen eine Keilform aufweisen. Die Keilform kann sich zum Inneren des Mittelblocks hin verjüngen.

Wenn die Halteteile in der Vertiefung angeordnet sind, können die Halteteile zusammen mit den Innen- und Außenkavitäten die Formhohlräume in der geschlossenen Stellung bilden. Hierzu können die Halteteile bevorzugt länglich und quaderförmig mit einem flachen Querschnitt ausgebildet sein. Bevorzugt weisen Schmalseiten der Halteteile entlang der Längsrichtung der Halteteile Haltekavitäten auf, welche gemeinsam mit den Innen- und Außenkavitäten die Formhohlräume bilden. Die Haltekavitäten können dazu dienen, die Spritzlinge bzw. Formteile zu halten, insbesondere in der geöffneten Stellung und beim Bewegen der Halteteile um den Mittelblock herum.

Gemäß einer weiteren vorteilhaften Ausführungsform sind die Halteteile von der Hubvorrichtung in einer Richtung bewegbar, welche von einer radialen Richtung bezüglich der Drehachse abweicht. Anders ausgedrückt werden die Halteteile von der Hubvorrichtung aufgrund ihres Versatzes nicht radial (bezüglich der Drehachse) aus den Flächen des Mittelblocks herausgehoben sondern nur normal, d.h. senkrecht.

Bevorzugt verlaufen die Schienen der Schienenpaare in einer Richtung senkrecht zu den zwei Flächen des Mittelblocks, an welchen die Innenkavitäten angeordnet sind, d.h. insbesondere senkrecht zu den aktiven Flächen. Die Schienen und auch der Drehring des Drehlagers erstrecken sich bevorzugt parallel zu der Ober- und/oder Unterseite des Mittelblocks. Insbesondere ist der Drehring jeweils angrenzend an die Ober- und/oder Unterseite des Mittelblocks angeordnet.

Die Schienen der Schienenpaare verlaufen vorteilhafterweise nicht in einer radialen Richtung bezüglich der Drehachse, sondern sind so angeordnet, dass die Schienenpaare eine Bewegung der Halteteile entlang einer Senkrechten zu der nächstliegenden Fläche oder den aktiven Flächen des Mittelblocks ermöglichen.

Durch das Herausheben der Halteteile bzw. das Wegbewegen der Halteteile von dem Mittelblock wird ein Abstand zwischen den Halteteilen und dem Mittelblock geschaffen, der es ermöglicht, die Halteteile um den Mittelblock herum zu bewegen, ohne dass die Halteteile an den Kanten des Mittelblocks anstoßen.

Vorteilhafterweise umfassen die Halteteile Schlitten, die eine Bewegung der Halteteile mittels der Hubvorrichtung ermöglichen, wobei die Schlitten z.B. auf oder an dem Drehgestell und insbesondere auf oder an einem der Schienenpaare gleitend gelagert sind. Die Schlitten können beispielsweise durch einen Rücksprung gebildet sein.

Bevorzugt ist das Drehgestell zwischen der Drehachse und den Halteteilen zumindest abschnittsweise Y-förmig, insbesondere mit zwei Armen, ausgebildet. Die Y-Form kann eine Verbindung zwischen den Schienenpaaren und der Drehachse herstellen und dem Drehgestell auf diese Weise zusätzliche mechanische Stabilität verleihen. Der Y-förmige Abschnitt ist bevorzugt nur oberhalb des Mittelblocks angeordnet.

Die Schienen der Schienenpaare können mittels eines U-förmigen Verbinders mit den Armen des Y-förmigen Abschnitts des Drehgestells gekoppelt sein. Insbesondere sind die Schienen, wie oben erwähnt, benachbart zu dem Mittelblock an dessen Ober- und Unterseite angeordnet. Der Y-förmige Abschnitt des Drehgestells ist beabstandet zu den Schienen angeordnet, wobei zwischen den Schienen und dem Y-förmigen Abschnitt z.B. die Hubvorrichtung(en) angeordnet ist/sind.

Gemäß einer weiteren vorteilhaften Ausführungsform umfasst zumindest eines der Halteteile Kavitäten, durch welche ein Kühlmittel geführt wird. Insbesondere umfassen alle Halteteile Kavitäten, die von dem Kühlmittel durchströmt werden. Neben den Halteteilen können auch die Innen- und/oder Außenkavitäten eine Kühlung umfassen und ebenfalls von Kühlmittel gekühlt werden. Durch das Kühlmittel kann ein beschleunigtes Abkühlen der Spritzlinge erreicht werden, wodurch die Dauer von Prozesszyklen des Etagenwerkzeugs verkürzt werden kann.

Besonders bevorzugt ist zumindest eines der Halteteile derart verdrehbar gelagert, dass das verdrehbare Halteteil eingerichtet ist, zwei, insbesondere gegenüberliegende, Oberflächen des Halteteils derselben Seite des Mittelblocks zuzuwenden. Bevorzugt können auch alle Halteteile auf die vorgenannte Art verdrehbar gelagert sein.

Die Halteteile können z.B. um eine Halteteilachse verdrehbar sein, wobei sich die Halteteilachse entlang der Längsrichtung der Halteteile und bevorzugt parallel zu der Drehachse erstreckt. Durch die doppelte Drehbarkeit der Halteteile, nämlich einerseits um den Mittelblock und andererseits um sich selbst, wird die Durchführung von vielen verschiedenen Prozessabläufen mittels des Etagenwerkzeugs gestattet. Hierdurch wird die Flexibilität des Einsatzes des Etagenwerkzeugs weiter erhöht. Beispielsweise können zunächst Spritzlinge mit einer ersten Komponente gespritzt werden, wobei die Spritzlinge nur auf einer Schmalseite eines Halteteils gehalten sind. Durch das Drehen des Halteteils um die Halteteilachse (ohne eine Verdrehung des Drehgestells) können die Spritzlinge im Bereich derselben aktiven Fläche des Mittelblocks verbleiben aber z.B. in andere Formhöhlungen verbracht werden. In dieser zweiten Position kann beispielsweise eine zweite Komponente zu den Spritzlingen hinzugefügt werden, die z.B. die erste Komponente teilweise umschließt. Anschließend können durch Verdrehen des Drehgestells das Halteteil und damit die Zweikomponenten-Spritzlinge zu der zweiten aktiven Fläche des Mittelblocks verbracht werden. An der zweiten aktiven Fläche kann dann eine dritte Komponente und nach dem nochmaligen Drehen nur des Halteteils um die Halteteilachse eine vierte Komponente gespritzt werden. Der komplexe Vorgang des Spritzgießens von Formteilen mit vier Komponenten kann mit dem Etagenwerkzeug somit auf einfache und damit wirtschaftliche Art und Weise realisiert werden.

Um die Verdrehung der Halteteile um die Halteteilachse zu gestatten, können die Halteteile mittels eines zusätzlichen Drehlagers an den Schienenpaaren verschieblich und zugleich drehbar befestigt sein.

Gemäß einer weiteren vorteilhaften Ausführungsform erfolgt ein Abstreifen von Spritzlingen aus den Halteteilen in einer Richtung parallel zu der jeweiligen Seite (d.h. zu der jeweils am nächsten gelegenen Seite) des Mittelblocks. Die Halteteile können hierzu seitlich (d.h. senkrecht zu der Halteteilachse) verschiebbare Abstreifleisten umfassen, die die Spritzlinge seitlich aus den Halteteilen herausheben, wonach die Spritzlinge beispielsweise in einen Auffangbehälter unter dem Etagenwerkzeug fallen können.

Des Weiteren wird hierin auch ein weiteres Etagenwerkzeug offenbart, durch welches die Aufgabe der Erfindung dadurch gelöst wird, dass zumindest eines der Halteteile derart verdrehbar gelagert ist, dass das verdrehbare Halteteil eingerichtet ist, zwei, insbesondere gegenüberliegende, Oberflächen des Halteteils derselben Seite des Mittelblocks zuzuwenden. Insbesondere umfasst das Etagenwerkzeug zwei Halteteile und bevorzugt genau zwei Halteteile.

Wie oben ausgeführt, ermöglicht das Verdrehen der Halteteile um eine Halteteilachse eine zusätzliche Flexibilität in den mit dem Etagenwerkzeug durchführbaren Prozessen.

Gemäß einer vorteilhaften Ausführungsform ist zumindest eines der Halteteile in einer Richtung von dem Mittelblock wegbewegbar, welche von einer radialen Richtung bezüglich der Drehachse abweicht. Die Halteteile können somit z.B. von einer Mittelposition bezüglich einer Seite des Mittelblocks versetzt angeordnet sein, so dass sich eine asymmetrische Position ergibt. Aufgrund der asymmetrischen Position können beispielsweise besonders lange Spritzlinge geformt werden, da der Abstand zwischen dem Halteteil und dem entfernten Ende der aktiven Fläche des Mittelblocks besonders groß ist. Durch die asymmetrisch bzw. versetzt angeordneten Halteteile kann das Drehgestell einen Z-förmigen Abschnitt aufweisen, wenn z.B. zwei Halteteile für gegenüberliegende Flächen des Mittelblocks verwendet werden. Der Z-förmige Abschnitt kann im Übrigen dieselben Eigenschaften aufweisen, wie der oben erwähnte Y-förmige Abschnitt.

Die beiden Halteteile sind insbesondere achsensymmetrisch zu der Drehachse angeordnet.

Dementsprechend können auch die Schienen der Schienenpaare, welche das jeweilige Halteteil verschieblich befestigen, ebenfalls achsensymmetrisch zu der Drehachse ausgebildet sein. Die Schienen verlaufen bevorzugt nicht radial zu der Drehachse. Stattdessen können die Schienen senkrecht zu den aktiven Flächen verlaufen.

Die Ausführungen zu dem Etagenwerkzeug gemäß dem ersten unabhängigen Anspruch gelten entsprechend für das weitere Etagenwerkzeug. Dies betrifft insbesondere die Ausführungen zu der konkreten Ausgestaltung des Drehgestells, der Haltteile und der Kavitäten zur Bildung der Formhohlräume.

Außerdem betrifft die Erfindung eine Spritzgießvorrichtung mit einem Etagenwerkzeug der vorstehend erläuterten Art.

Nachfolgend wird die Erfindung rein beispielhaft unter Bezugnahme auf die Zeichnungen beschrieben. Es zeigen:
- Fig. 1: eine erste Ausführungsform eines Etagenwerkzeugs in der geschlossenen Stellung;
- Fig. 2: das Etagenwerkzeug von Fig. 1 in der geöffneten Stellung;
- Fig. 3: das Etagenwerkzeug von Fig. 1 in der geöffneten Stellung mit verdrehtem Drehgestell;
- Fig. 4: eine zweite Ausführungsform eines Etagenwerkzeugs in der geschlossenen Stellung;
- Fig. 5: das Etagenwerkzeug von Fig. 4 in der geöffneten Stellung; und
- Fig. 6: das Etagenwerkzeug von Fig. 4 in der geöffneten Stellung mit verdrehtem Drehgestell.

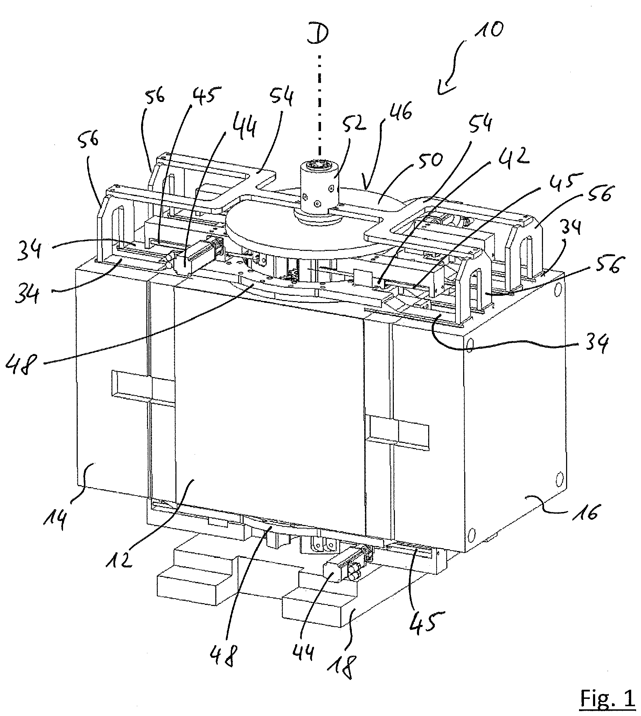

Fig. 1 zeigt eine erste Ausführungsform eines Etagenwerkzeugs 10, welches in einer (nicht gezeigten) Spritzgießvorrichtung oder Spritzgießmaschine verwendet wird. Das Etagenwerkzeug 10 umfasst einen Mittelblock 12, einen ersten äußeren Formblock 14 und einen zweiten äußeren Formblock 16. Der Mittelblock 12 ist auf einem Lagerblock 18 gelagert. Die äußeren Formblöcke 14, 16 sind relativ zu dem Mittelblock 12 linear verfahrbar.

In Fig. 1 ist das Etagenwerkzeug 10 in einer geschlossenen Stellung gezeigt. Dies bedeutet, die äußeren Formblöcke 14, 16 sind an den Mittelblock 12 herangefahren und bilden auf diese Weise eine durchgängige Einheit bzw. einen einheitlichen Block.

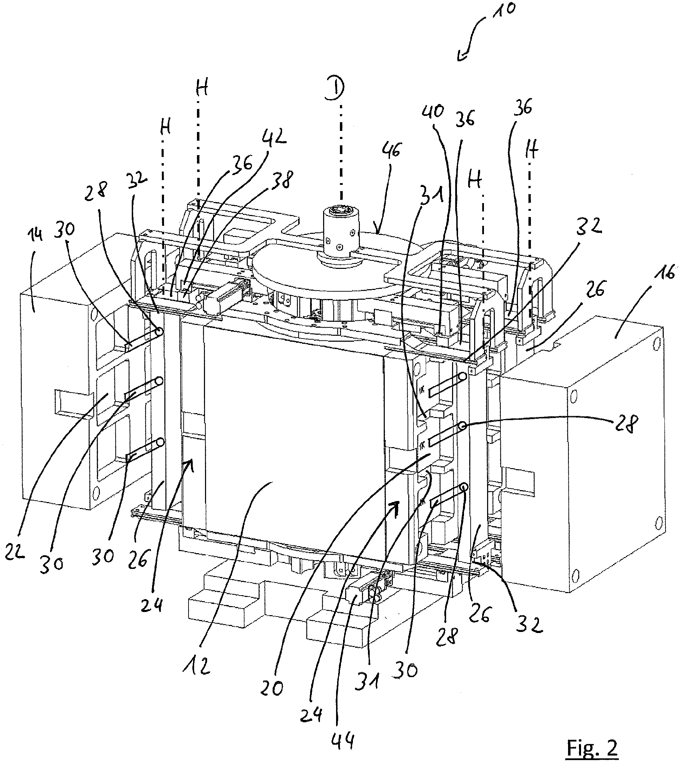

Fig. 2 hingegen zeigt das Etagenwerkzeug 10 in der geöffneten Stellung, in welcher ein Abstand zwischen dem Mittelblock 12 und den äußeren Formblöcken 14, 16 vorhanden ist. Dieser Abstand wird durch eine lineare Verschiebung des Mittelblocks 12 und des zweiten äußeren Formblocks 16 vom ersten äußeren Formblock 14 weg erreicht.

In Fig. 2 ist zu erkennen, dass der Mittelblock 12 Innenkavitäten 20 aufweist, welche mit Außenkavitäten 22 der äußeren Formblöcke 14, 16 zusammenwirken, um gemeinsam Formhohlräume für das Spritzen von Spritzlingen zu bilden. Von den Außenkavitäten 22 sind in Fig. 2 nur diejenigen des ersten äußeren Formblocks 14 zu erkennen. Grundsätzlich sind der erste äußere Formblock 14 und der zweite äußere Formblock 16 symmetrisch zu dem Mittelblock 12 aufgebaut. Die Seiten des Mittelblocks 12, welche Innenkavitäten 20 umfassen, liegen einander bezüglich des Mittelblocks 12 gegenüber und bilden jeweils aktive Flächen 24.

Benachbart zu den aktiven Flächen 24 sind vier Halteteile 26 angeordnet, von welchen in der Fig. 2 nur drei sichtbar sind. Die Halteteile 26 umfassen Haltekavitäten 28, welche die Formhohlräume zusammen mit den Innen- und Außenkavitäten 20, 22 definieren und nach dem Spritzen von Spritzlingen 30 dazu dienen, die Spritzlinge 30 zu halten. Jeweils zwei der Halteteile 26 sind zugleich auf derselben Seite des Mittelblocks 12 angeordnet, d.h. befinden sich benachbart derselben aktiven Fläche 24.

Die Halteteile 26 sind in senkrechter Richtung von der aktiven Fläche 24 weg verfahrbar, so dass sie die in Fig. 2 gezeigte Position einnehmen können. Die Halteteile 26 können aber auch in die aktiven Flächen 24 eingefahren werden, so dass die Haltekavitäten 28 mit den Innenkavitäten 20 und den Außenkavitäten 22 zusammenwirken, um die Formhohlräume zu bilden. Sind die Halteteile 26 in die aktiven Flächen 24 eingefahren, liegen die Halteteile 26 in quaderförmigen Vertiefungen 31, welche sich zwischen den Innenkavitäten 20 erstrecken. Die quaderförmigen Vertiefungen 31 sind so dimensioniert, dass die Halteteile 26 möglichst spielfrei gelagert sind.

Um die Verschiebbarkeit bzw. Verfahrbarkeit der Halteteile 26 zu ermöglichen, umfassen die Halteteile 26 jeweils an ihren Enden in Längsrichtung zwei Rücksprünge 32, welche auf Schienen 34 gelagert sind und so ein gleitendes Verschieben der Halteteile 26 senkrecht zu dem Mittelblock 12 ermöglichen. Die Halteteile 26 umfassen zudem einen Schlittenabschnitt 36, welcher jeweils zwischen zwei Schienen 34 angeordnet ist und die Halteteile 26 führt. Die Schienen 34 sind parallel zueinander, wobei jeweils zwei Schienen 34 ein Schienenpaar bilden. An dem Schlittenabschnitt 36 ist jeweils ein Vorsprung 38 angeordnet, welcher in eine Nut 40 eines Verstellelements 42 eingreift. Das Verstellelement 42 ist mit jeweils einem Hubantrieb 44 gekoppelt, welcher die Bewegung der Halteteile 26 unabhängig voneinander mittels einer Gewindespindel 45 ermöglicht.

Auf der Ober- und Unterseite des Mittelblocks 12 ist jeweils ein separater Hubantrieb 44 und ein separates Verstellelement 42 pro Halteteil 26 vorgesehen. Jeweils zwei Hubantriebe 44 und zwei Verstellelemente 42 bilden gemeinsam eine Hubvorrichtung für das jeweilige Halteteil 26. Jedes Halteteil 26 umfasst in entsprechender Weise zwei Schlittenabschnitte 36 und zwei Vorsprünge 38, die jeweils oben und unten in die Nuten 40 der Verstellelemente 42 eingreifen.

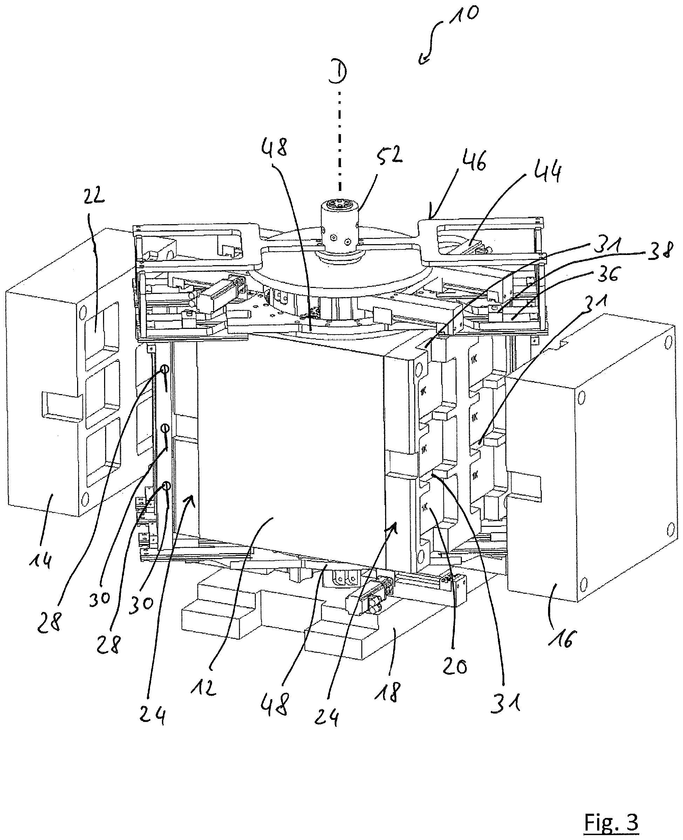

In der in Fig. 2 gezeigten, herausgefahrenen Position der Halteteile 26 können die Halteteile 26 um den Mittelblock 12 herum bewegt werden, was in Fig. 3 dargestellt ist.

Zudem können die Halteteile 26 um ihre jeweilige Halteteilachse H gedreht werden, insbesondere um 360°. Die Halteteilachsen H verlaufen parallel zu der Drehachse D. Durch die Drehung der Halteteile 26 ergeben sich zusätzliche Möglichkeiten bei der Gestaltung von Prozessabläufen.

In Fig. 3 sind die Halteteile 26 in der geöffneten Stellung des Etagenwerkzeugs 10 etwa um 45° um eine zentrale Drehachse D verdreht. Die zentrale Drehachse D ist zentral in dem Mittelblock 12 angeordnet und durchdringt den Mittelblock 12 in vertikaler Richtung.

Das Drehgestell 46 umfasst an der Oberseite des Mittelblocks 12 und an der Unterseite des Mittelblocks 12 jeweils ein Drehlager 48, an welchem die Schienen 34 befestigt sind, so dass bei der Drehung des Drehlagers 48 auch die Schienen 34 und damit auch die an den Schienen 34 verschieblich gelagerten Halteteile 26 um den Mittelblock 12 herum bewegbar sind.

Oberhalb des Drehlagers 48 ist eine nicht drehbare, mit dem Mittelblock 12 verbundene, kreisförmige Abdeckplatte 50 vorgesehen. Unterhalb der Abdeckplatte 50 und innerhalb des Drehlagers 48 sind die Hubantriebe 44 und die Verstellelemente 42 an dem Mittelblock 12 befestigt. Bei einer Drehung des Drehlagers 48 bzw. des Drehgestells 46 verbleiben die Hubantriebe 44 und die Verstellelemente 42 in ihrer Position.

Oberhalb der Abdeckplatte 50 ist ein Kühlmittelverteiler 52 angeordnet, welcher jeweils über Y-förmige Verstrebungen 54 mit U-förmigen Haltern 56 verbunden sind. Die U-förmigen Halter 56 sind jeweils an zwei der Schienen 34 befestigt.

Der Kühlmittelverteiler 52 kann beispielsweise eine Wasserkühlung der Halteteile 26 über (nicht dargestellte) flexible Kühlschläuche ermöglichen, die an den Halteteilen 26 angekoppelt sind.

Im Betrieb des Etagenwerkzeugs 10 können die Halteteile 26 zunächst in die aktiven Flächen 24 eingefahren sein, um mit den Innen- und Außenkavitäten 20, 22 Formhohlräume zu bilden. In diesen Zustand werden der Mittelblock 12 sowie die äußeren Formblöcke 14, 16 in die geschlossene Stellung verbracht, woraufhin Material einer ersten Komponente in die Formhohlräume eingespritzt wird, um die Spritzlinge 30 zu bilden. Nach dem Bilden der Spritzlinge 30 wird das Etagenwerkzeug 10 in die geöffnete Stellung verbracht, woraufhin die Halteteile 26 mit den in den Haltekavitäten 28 der Halteteile 26 befestigten Spritzlingen 30 von dem Mittelblock 12 wegverfahren werden. Nach dem Wegverfahren der Halteteile 26 von dem Mittelblock 12 kann das Drehgestell 46 beispielsweise eine 180°-Drehung vollführen, so dass die Spritzlinge 30 nun an der anderen aktiven Fläche 24 weiterverarbeitet werden können, beispielsweise durch das zusätzliche Spritzen einer zweiten Komponente.

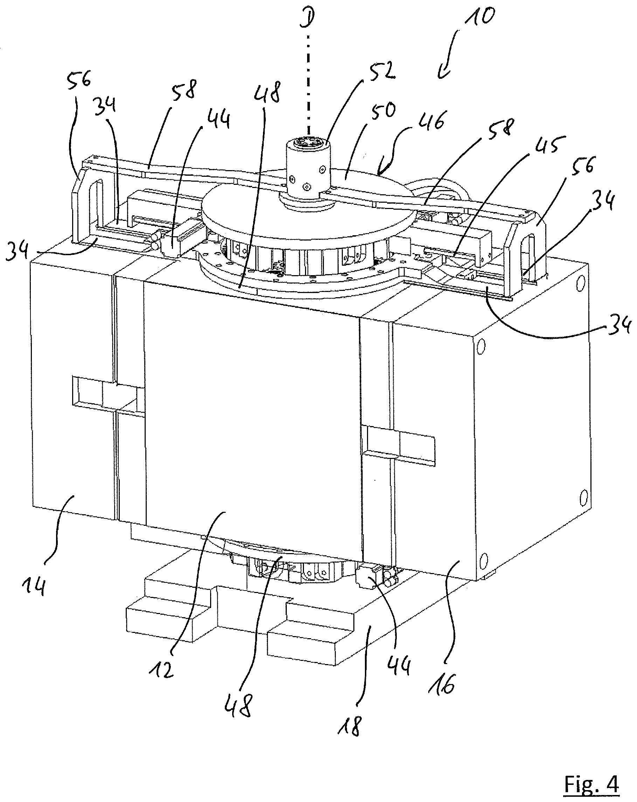

In den Fig. 4 bis 6 ist eine zweite Ausführungsform des Etagenwerkzeugs 10 gezeigt. Die zweite Ausführungsform unterscheidet sich von der ersten Ausführungsform gemäß Fig. 1 bis 3 dadurch, dass insgesamt nur zwei Halteteile 26 vorgesehen sind. Die Halteteile 26 sind jeweils asymmetrisch bezüglich der aktiven Flächen 24 gelagert, so dass der Kühlmittelverteiler 52 nicht über Y-förmige Verstrebungen 54, sondern über Z-förmige Verstrebungen 58 mit den Schienen 34 gekoppelt ist.

In Fig. 4 ist die zweite Ausführungsform des Etagenwerkzeugs 10 in der geschlossenen Stellung gezeigt. Es ist zu erkennen, dass insgesamt nur zwei Hubvorrichtungen umfassend jeweils zwei Hubantriebe 44 und zwei Verstellelemente 42 vorgesehen sind. Das Etagenwerkzeug 10 umfasst vier Schienenpaare aus jeweils zwei parallel verlaufenden Schienen 34.

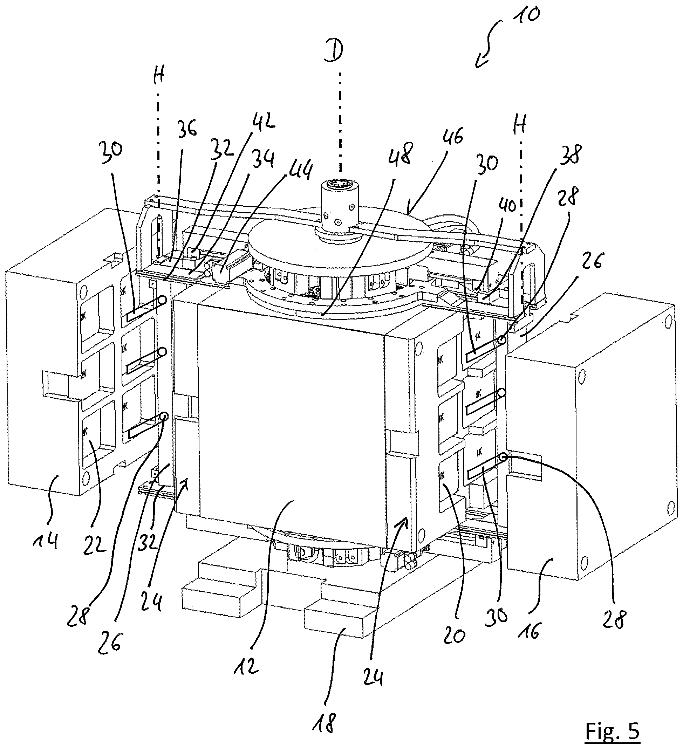

Wie in Fig. 5 gezeigt ist, befestigen jeweils vier Schienen 34 ein Halteteil 26. Die beiden Halteteile 26 sind jeweils asymmetrisch zu den aktiven Flächen 24 aber achsensymmetrisch zu der Drehachse D gehalten.

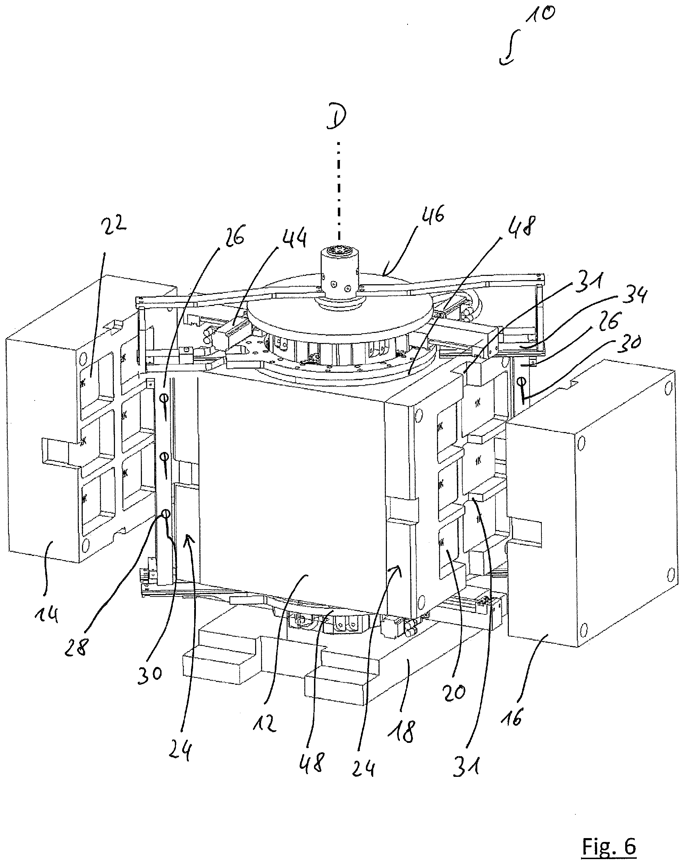

Fig. 6 zeigt in Analogie zur Fig. 3 die Drehung der Halteteile 26 mittels des Drehgestells 46. Im Übrigen gelten die zu der ersten Ausführungsform getroffenen Aussagen für die zweite Ausführungsform entsprechend.

### Bezugszeichenliste

- 10: Etagenwerkzeug
- 12: Mittelblock
- 14: erster äußerer Formblock
- 16: zweiter äußerer Formblock
- 18: Lagerblock
- 20: Innenkavitäten
- 22: Außenkavitäten
- 24: aktive Fläche
- 26: Halteteile
- 28: Haltekavität
- 30: Spritzling
- 31: Vertiefung
- 32: Rücksprung
- 34: Schienen
- 36: Schlittenabschnitt
- 38: Vorsprung
- 40: Nut
- 42: Verstellelement
- 44: Hubantrieb
- 45: Gewindespindel
- 46: Drehgestell
- 48: Drehlager
- 50: Abdeckplatte
- 52: Kühlmittelverteiler
- 54: Y-förmige Verstrebung
- 56: U-förmiger Halter
- 58: Z-förmige Verstrebung
- D: Drehachse
- H: Halteteilachse

## Patentansprüche

1. Etagenwerkzeug (10) für eine Spritzgießvorrichtung, wobei das Etagenwerkzeug (10) einen Mittelblock (12) sowie einen ersten und zweiten äußeren Formblock (14, 16) und zumindest zwei Halteteile (26), welche zugleich auf derselben Seite (24) des Mittelblocks (12) anordenbar sind, umfasst,
wobei der Mittelblock (12) und der erste und zweite äußere Formblock (14, 16) zwischen einer geschlossenen Stellung und einer geöffneten Stellung verstellbar sind,
wobei die äußeren Formblöcke (14, 16) auf ihrer jeweils dem Mittelblock (12) zugewandten Seite Außenkavitäten (22) aufweisen und der Mittelblock (12) auf seinen den äußeren Formblöcken (14, 16) zugewandten Seiten jeweils Innenkavitäten (20) umfasst,
wobei die Außenkavitäten (22) in der geschlossenen Stellung mit den Innenkavitäten (20) zusammenwirken, um Formhohlräume zu bilden,
wobei zumindest ein Teilbereich der Formhohlräume von verstellbaren Halteteilen (26) gebildet wird, welche bezüglich einer Drehachse (D) vollständig um den Mittelblock (12) herum bewegbar sind,
wobei das Etagenwerkzeug (10) zumindest eine Hubvorrichtung (42, 44) umfasst, welche ausgebildet ist, die Halteteile (26) von dem Mittelblock (12) weg zu bewegen und/oder dem Mittelblock (12) anzunähern,
**dadurch gekennzeichnet dass**
die Hubvorrichtung (42, 44) eingerichtet ist, während einer Drehung der Halteteile (26) um die Drehachse (D) von den Halteteilen (26) entkoppelt zu werden.

2. Etagenwerkzeug (10) nach Anspruch 1,
**dadurch gekennzeichnet, dass**
die Drehachse (D) zentral in dem Mittelblock (12) angeordnet ist und/oder dass ein Drehgestell (46) vorgesehen ist, welches sich um die Drehachse (D) dreht und die Halteteile (26) um den Mittelblock (12) herum bewegt.

3. Etagenwerkzeug (10) nach Anspruch 2,
**dadurch gekennzeichnet, dass**
sich das Drehgestell (46) sowohl ober- als auch unterhalb des Mittelblocks (12) erstreckt.

4. Etagenwerkzeug (10) nach Anspruch 2 oder 3,
**dadurch gekennzeichnet, dass**
das Drehgestell (46) zumindest ein Drehlager (48) umfasst, welches in einer Ober- und/oder Unterseite des Mittelblocks (12) angeordnet ist.

5. Etagenwerkzeug (10) nach zumindest einem der Ansprüche 2 bis 4,
**dadurch gekennzeichnet, dass**
die Halteteile (26) dauerhaft mit dem Drehgestell (46) gekoppelt sind und/oder
das Drehgestell (46) zumindest ein Schienenpaar (34) umfasst, welches eines der Halteteile (26) verschieblich befestigt.

6. Etagenwerkzeug (10) nach zumindest einem der Ansprüche 2 bis 5,
**dadurch gekennzeichnet, dass**
zumindest vier Halteteile (26) vorgesehen sind, von welchen jeweils zwei zugleich auf gegenüberliegenden Seiten (24) des Mittelblocks (12) anordenbar sind.

7. Etagenwerkzeug (10) nach zumindest einem der vorstehenden Ansprüche, **dadurch gekennzeichnet, dass**
für jedes Halteteil (26) eine separate Hubvorrichtung (42, 44) vorgesehen ist.

8. Etagenwerkzeug (10) nach zumindest einem der vorstehenden Ansprüche, **dadurch gekennzeichnet, dass**
die Hubvorrichtung (42, 44) ausgebildet ist, die Halteteile (26) senkrecht zu der jeweiligen Seite (24) des Mittelblocks (12) zu bewegen.

9. Etagenwerkzeug (10) nach einem der Ansprüche 7 bis 8,
**dadurch gekennzeichnet, dass**
die Halteteile (26) von der Hubvorrichtung (42, 44) in einer Richtung bewegbar sind, welche von einer radialen Richtung bezüglich der Drehachse (D) abweicht.

10. Etagenwerkzeug (10) nach einem der Ansprüche 7 bis 9,
**dadurch gekennzeichnet, dass**
die Halteteile (26) Schlitten (36, 38) umfassen, die eine Bewegung der Halteteile (26) mittels der Hubvorrichtung (42, 44) ermöglichen, wobei die Schlitten (36, 38) bevorzugt an dem Drehgestell (46) gleitend gelagert sind.

11. Etagenwerkzeug (10) nach zumindest einem der vorstehenden Ansprüche, **dadurch gekennzeichnet, dass**
das Drehgestell (46) zwischen der Drehachse (D) und den zwei Halteteilen (26) zumindest abschnittsweise Y-förmig (54) mit zwei Armen ausgebildet ist, wobei an jedem Arm eines der Halteteile (26) angebracht ist.

12. Etagenwerkzeug (10) nach zumindest einem der vorstehenden Ansprüche, **dadurch gekennzeichnet, dass**
zumindest eines der Halteteile (26) derart verdrehbar gelagert ist, dass das verdrehbare Halteteil (26) eingerichtet ist, zwei gegenüberliegende Oberflächen des Halteteils (26) derselben Seite des Mittelblocks (12) zuzuwenden, wobei bevorzugt das verdrehbare Halteteil (26) um eine Halteteilachse (H) verdrehbar ist, welche sich parallel zu der Drehachse (D) erstreckt.

13. Spritzgießvorrichtung mit einem Etagenwerkzeug (10) nach einem der vorstehenden Ansprüche.

## Claims

1. A stack mold (10) for an injection molding apparatus, wherein the stack mold (10) comprises a central block (12) as well as a first and second outer mold block (14, 16) and at least two holding parts (26) which can be simultaneously arranged at the same side (24) of the central block (12),
wherein the central block (12) and the first and second outer mold blocks (14, 16) are adjustable between a closed position and an open position;
wherein the outer mold blocks (14, 16) have outer cavities (22) at their sides each facing the central block (12) and the central block (12) comprises respective inner cavities (20) at its sides facing the outer mold blocks (14, 16);
wherein the outer cavities (22) cooperate with the inner cavities (20) in the closed position to form mold hollow spaces;
wherein at least a part region of the mold hollow spaces is formed by adjustable holding parts (26) which are movable completely around the central block (12) with respect to an axis of rotation (D); and
wherein the stack mold (10) comprises at least one lifting apparatus (42, 44) which is configured to move the holding parts (26) away from the central block (12) and/or toward the central block (12),
**characterized in that**
the lifting apparatus (42, 44) is configured to be decoupled from the holding parts (26) during a rotation of the holding parts (26) about the axis of rotation (D).

2. A stack mold (10) in accordance with claim 1,
**characterized in that**
the axis of rotation (D) is arranged centrally in the central block (12); and/or in that a bogie (46) is provided which rotates about the axis of rotation (D) and which moves the holding parts (26) around the central block (12).

3. A stack mold (10) in accordance with claim 2,
**characterized in that**
the bogie (46) extends both above and beneath the central block (12).

4. A stack mold (10) in accordance with claim 2 or claim 3,
**characterized in that**
the bogie (46) comprises at least one rotary bearing (48) which is arranged in an upper side and/or a lower side of the central block (12).

5. A stack mold (10) in accordance with at least one of the claims 2 to 4, **characterized in that**
the holding parts (26) are permanently coupled to the bogie (46); and/or in that the bogie (46) comprises at least one rail pair (34) which displaceably fastens one of the holding parts (26).

6. A stack mold (10) in accordance with at least one of the claims 2 to 5, **characterized in that**
at least four holding parts (26) are provided of which a respective two can be simultaneously arranged at oppositely disposed sides (24) of the central block (12).

7. A stack mold (10) in accordance with at least one of the preceding claims, **characterized in that**
a separate lifting apparatus (42, 44) is provided for each holding part (26).

8. A stack mold (10) in accordance with at least one of the preceding claims, **characterized in that**
the lifting apparatus (42, 44) is configured to move the holding parts (26) perpendicular to the respective side (24) of the central block (12).

9. A stack mold (10) in accordance with one of the claims 7 to 8, **characterized in that**
the holding parts (26) are movable by the lifting apparatus (42, 44) in a direction which differs from a radial direction with respect to the axis of rotation (D).

10. A stack mold (10) in accordance with any one of the claims 7 to 9, **characterized in that**
the holding parts (26) comprise slides (36, 38) which enable a movement of the holding parts (26) by means of the lifting apparatus (42, 44), with the slides (36, 38) preferably being slidingly supported at the bogie (46).

11. A stack mold (10) in accordance with at least one of the preceding claims, **characterized in that**
the bogie (46) is at least sectionally formed in a Y shape (54) with two arms between the axis of rotation (D) and the two holding parts (26), with one of the holding parts (26) being attached to each arm.

12. A stack mold (10) in accordance with at least one of the preceding claims, **characterized in that**
at least one of the holding parts (26) is rotatably supported such that the rotatable holding part (26) is configured to face two oppositely disposed surfaces of the holding part (26) of the same side of the central block (12), with the rotatable holding part (26) preferably being rotatable about a holding part axis (H) which extends in parallel with the axis of rotation (D).

13. An injection molding apparatus comprising a stack mold (10) in accordance with any one of the preceding claims.

## Revendications

1. Outil à étages (10) pour un dispositif de coulée par injection, l'outil à étages (10) comprenant un bloc central (12) et des premier et second blocs de formage extérieurs (14, 16) et au moins deux éléments de retenue (26) susceptibles d'être agencés à la fois sur le même côté (24) du bloc central (12),
dans lequel
le bloc central (12) et les premier et second blocs de formage extérieurs (14, 16) sont réglables entre une position fermée et une position ouverte, les blocs de formage extérieurs (14, 16) présentent des cavités extérieures (22) sur leur côté respectif tourné vers le bloc central (12), et le bloc central (12) comprend des cavités intérieures (20) sur ses côtés respectifs tournés vers les blocs de formage extérieurs (14, 16),
dans la position fermée, les cavités extérieures (22) coopèrent avec les cavités intérieures (20), afin de former des cavités de moulage,
au moins une zone partielle des cavités de moulage est formée par des éléments de retenue réglables (26) qui sont peuvent être déplacés complètement autour du bloc central (12) par rapport à un axe de rotation (D), l'outil à étages (10) comprend au moins un dispositif de levage (42) qui est réalisé pour éloigner les éléments de retenue (26) du bloc central (12) et/ou pour les rapprocher du bloc central (12),
**caractérisé en ce que**
le dispositif de levage (42, 44) est conçu pour être découplé des éléments de retenue (26) pendant une rotation des éléments de retenue (26) autour de l'axe de rotation (D).

2. Outil à étages (10) selon la revendication 1,
**caractérisé en ce que**
l'axe de rotation (D) est agencé de manière centrale dans le bloc central (12), et/ou
**en ce qu'**il est prévu un bogie (46) qui tourne autour de l'axe de rotation (D) et qui déplace les éléments der retenue (26) autour du bloc central (12).

3. Outil à étages (10) selon la revendication 2,
**caractérisé en ce que**
le bogie (46) s'étend aussi bien au-dessus qu'au-dessous du bloc central (12).

4. Outil à étages (10) selon la revendication 2 ou 3,
**caractérisé en ce que**
le bogie (46) comprend au moins un palier de rotation (48) agencé dans un côté supérieur et/ou inférieur du bloc central (12).

5. Outil à étages (10) selon l'une au moins des revendications 2 à 4, **caractérisé en ce que**
les éléments de retenue (26) sont couplés de façon permanente au bogie (46), et/ou
le bogie (46) comprend au moins une paire de rails (34) qui fixe de manière coulissante l'un des éléments de retenue (26).

6. Outil à étages (10) selon l'une au moins des revendications 2 à 5, **caractérisé en ce que**
il est prévu au moins quatre éléments de retenue (26), dont deux peuvent être agencés à la fois sur des côtés opposés (24) du bloc central (12).

7. Outil à étages (10) selon l'une au moins des revendications précédentes, **caractérisé en ce que**
un dispositif de levage séparé (42, 44) est prévu pour chaque élément de retenue (26).

8. Outil à étages (10) selon l'une des revendications précédentes, **caractérisé en ce que**
le dispositif de levage (42, 44) est réalisé pour déplacer les éléments de retenue (26) perpendiculairement au côté respectif (24) du bloc central (12).

9. Outil à étages (10) selon l'une des revendications 7 à 8,
**caractérisé en ce que**
les éléments de retenue (26) peuvent être déplacés par le dispositif de levage (42, 44) dans une direction qui diffère d'une direction radiale par rapport à l'axe de rotation (D).

10. Outil à étages (10) selon l'une des revendications 7 à 9,
**caractérisé en ce que**
les éléments de retenue (26) comprennent des chariots (36, 38) permettant un déplacement des éléments de retenue (26) au moyen du dispositif de levage (42, 44), les chariots (36, 38) étant de préférence montés de manière coulissante sur le bogie (46).

11. Outil à étages (10) selon l'une au moins des revendications précédentes, **caractérisé en ce que**
entre l'axe de rotation (D) et les deux éléments de retenue (26), le bogie (46) est réalisé au moins localement en forme de Y (54) ayant deux bras, l'un des éléments de retenue (26) étant fixé à chaque bras.

12. Outil à étages (10) selon l'une au moins des revendications précédentes, **caractérisé en ce que**
l'un au moins des éléments de retenue (26) est monté de manière rotative de sorte que l'élément de retenue rotatif (26) est conçu pour diriger deux surfaces opposées de l'élément de retenue (26) vers le même côté du bloc central (12), de préférence l'élément de retenue rotatif (26) pouvant tourner autour d'un axe d'élément de retenue (H) qui s'étend parallèlement à l'axe de rotation (D).

13. Dispositif de coulée par injection comprenant un outil à étages (10) selon l'une des revendications précédentes.
